## Europäisches Patentamt

## European Patent Office

## Office européen des brevets

(19)

(11) Veröffentlichungsnummer: **0 107 646**

**B1**

(12)

# EUROPÄISCHE PATENTSCHRIFT

(45) Veröffentlichungstag der Patentschrift:
23.09.87

(21) Anmeldenummer: **83890188.2**

(22) Anmeldetag: **20.10.83**

(51) Int. Cl.⁴: **F 16 G 5/14**

(54) **Keilriemen mit verformter Armierung und Verfahren zur Endlosschliessung eines derartigen Keilriemens.**

(30) Priorität: **20.10.82 AT 3856/82**

(43) Veröffentlichungstag der Anmeldung:
**02.05.84 Patentblatt 84/18**

(45) Bekanntmachung des Hinweises auf die Patenterteilung:
**23.09.87 Patentblatt 87/39**

(84) Benannte Vertragsstaaten:
**BE CH DE FR GB LI LU NL SE**

(56) Entgegenhaltungen:
**DE-A-2 209 278**
**DE-A-3 115 862**
**DE-B-1 107 033**
**DE-B-2 138 132**
**FR-A-2 106 729**
**FR-A-2 392 286**
**GB-A-743 109**
**US-A-2 793 151**
**US-A-2 995 176**
**US-A-3 919 892**
**US-A-4 031 768**
**US-A-4 034 615**

(73) Patentinhaber: **Winkler, Roderich, Kramer**
**Glöcknerstrasse 46, A-1130 Wien (AT)**

(72) Erfinder: **Winkler, Roderich, Kramer**
**Glöcknerstrasse 46, A-1130 Wien (AT)**

LIBER, STOCKHOLM 1987

EP 0 107 646 B1

## Beschreibung

Die Erfindung bezieht sich auf einen Keilriemen gemäß den Merkmalen im Oberbegrif von Anspruch 1 sowie auf ein Verfahren zum Endlosschließen derartiger Keilriemen. Ein derartiger Keilriemen ist aus der FR-A-2 392 286 bekannt.

Keilriemen dieser Art dienen der Kraftübertragung und der Drehzahlübersetzung, wöbei die Leistungsfähigkeit vom Aufbau und dem verwendeten Material abhängig ist. Es sind bereits Keilriemen bekannt, bei welchen gewebeummantelte Gummikerne mit zusätzlicher Baumwoll- oder Polyestercordarmierung eingesetzt werden (US-A-4 034 615). Die Leistungsfähigkeit von Keilriemen läßt sich auch durch das Höhen- bzw. Breitenverhältnis variieren und es wurden bereits dehnungsarme Polyestercordeinlagen mit besonders hoher Reißfestigkeit verwendet. Zur Verbesserung der Biegbarkeit derartiger Keilriemen kann die Innenseite mit einer Profilierung, insbesondere einer Zahnung ausgebildet werden. Zur Verringerung des Schlupfes wurde bereits vorgeschlagen, die Flanken derartiger Keilriemen von einer Ummantelung freizuhalten. Bedingt durch den Aufbau derartiger Keilriemen werden diese Keilriemen zur Erzielung hoher Leistungsfähigkeit endlos gefertigt. Derartige endlose Keilriemen werden bei relativ aufwendigen Konstruktionen eingesetzt, wobei Spannvorrichtungen und fliegende Lagerungen für die Keilriemenscheiben erforderlich sind. Der Einbau derartiger endloser Riemen in geschlossene Systeme ist nach Zerlegen der Maschinen möglich. Es sind auch bereits offene Keilriemen bekannt geworden, bei welchen ein Endlosschließen des Keilriemens durch in Löcher eingesetzte Stahlplattenverbinder erfolgte. Derartige Konstruktionen sind in ihrer Leistungsfähigkeit mit Hochleistungskeilriemen in endlos geschlossener Bauweise nicht vergleichbar. Bei hohen Drehzahlen weisen derartige Keilriemen einen unruhigen Riemenlauf und einen schlechten Wirkungsgrad auf.

Die Erfindung zielt darauf ab, einen Keilriemen der eingangs genannten Art dahingehend weiterzubilden, daß sowohl eine hohe Festigkeit als auch die für die Montage und den stoßweisen Betrieb benötigte Elastizität sichergestellt ist. Zur Lösung dieser Aufgabe sieht die Erfindung die im Anspruch 1 enthaltenen Merkmale vor. Dadurch, daß wenigstens ein in Längsrichtung verlaufendes Armierungselement quer zur Längsrichtung des Keilriemens verformt ist, lassen sich Armierungselemente mit hoher Festigkeit und vergleichsweise geringer elastischer Dehnbarkeit verwenden, da in diesem Falle die Elastizität durch die Formgebung des Armierungselementes sichergestellt ist. Die Einbettung eines derartigen verformten Armierungselementes hat darüber hinaus eine hohe festigkeitssteigernde Wirkung für Belastungen quer zur Ebene der Verformung der Armierungselemente und es läßt sich unter Verwendung von Armierungselementen mit sehr hoher Festigkeit die gewünschte Elastizität in einem großen Bereich variieren.

Das verformte Armierungselement besteht aus Glasfaser oder Stahl. Die Verformung kann im besonderen mäanderförmig oder aber auch schraubenlinienförmig erfolgen, wobei bei mäanderförmig verformten Armierungselementen die Verformung vorzugsweise lediglich in einer Ebene erfolgt. Die Einbettung derartiger mäanderförmig verformter Armierungselemente erfolgt vorzugsweise so, daß die Verformungsebene der mäanderförmig verformten Armierungselemente in der Radialebene des geschlossenen Keilriemens oder auch orthogonal auf diese Radialebenen angeordnet ist. Bei einer Anordnung der Verformungsebene derartiger mäanderförmig verformter Armierungselemente quer zur Radialebene ergibt sich eine bessere Abstützung der Flanken des Keilriemens in den Keilriemenscheiben und höhere Belastbarkeit des Keilriemens quer zur Umfangsrichtung. Demgegenüber wird durch Einbettung derartiger mäanderförmig verformter Armierungselemente in der Weise, daß die Verformungsebene in der Radialebene liegt, eine Verbesserung des Biegeverhaltens derartiger Keilriemen bei gleichzeitig hoher Festigkeit erzielt.

Um die Verankerung derartiger Armierungselemente im Keilriemen zu verbessern, ist die Ausbildung so getroffen, daß das verformte Armierungselement in einem Einbettungsmaterial mit gegenüber dem Grundkörper höherer Festigkeit eingebettet ist. Hierbei kann das Einbettungsmaterial für die Armierungselemente mit dem Material des Grundkörpers verklebt oder verschweißt sein. Weiterhin wird das Biegeverhalten derartiger Keilriemen dadurch verbessert, daß der Keilriemen über seine Länge in regelmäßigen Abständen voneinander angeordnete Vertiefungen oder Durchbrechungen, insbesondere eine an sich bekannte Zahnung, aufweist. Mit Rücksicht auf die hohe erzielbare Elastizität bei gleichzeitig hoher Festigkeit ist die Bestimmung der Länge für das Endlosschließen derartiger Keilriemen nicht ohne weiters möglich, da beim Einspannen in eine Schneidvorrichtung bereits eine gewisse Verzerrung der Länge erfolgt. Die erfindungsgemäß zur Erhöhung der Biegefähigkeit vorgesehene Zahnung wird in einfacher Weise als Maß für die Länge des Keilriemens in ungespanntem Zustand herangezogen und erleichtert die exakte Ablängung des Keilriemens zum Zwecke des Endlosschließens. Zu diesem Zweck können einzelne Zähne zusätzliche Markierungen aufweisen, welche in regelmäßigen Abständen wiederkehren. Eine besonders gute Biegbarkeit ergibt sich, wenn die Vertiefungen oder Zahnungen an der schmäleren Profilseite des Keilriemens angeordnet sind. Eine derartige an der schmäleren Profilseite des Keilriemens angeordnete Zahnung ist auch beim Endlosschließen von Vorteil, da die Stirnflächen des abgelängten Keilriemens unter Verwendung eines in die Zahnung eingreifenden Paßstückes für den Schließvorgang aneinandergehalten werden können.

Das erfindungsgemäße Verfahren zum Endlosschließen eines derartigen Keilriemens besteht im wesentlichen darin, daß nach dem Ablängen das Einbettungsmaterial an den beiden Stirnbereichen über einen Teilbereich des Querschnittes des Keilriemens unter Freilegen zumindest des verformten Armierungselementes entfernt wird, sodaß die Armierung über den Grundkörper hinausragt und über einen Teil des Verbindungsbereiches doppelt vorhanden ist. Diese Armierung kann nebeneinander gelegt oder miteinander verhängt oder auch verschweißt werden. In den um die Armierung gebildeten Hohlraum wird nach dem Aneinanderlegen der Stirnenden des Grundkörpers mit dem Einbettungsmaterial gefüllt, insbesonders vergossen, verklebt oder verschweißt. Durch die freigelegten verformten Armierungselemente ergibt sich eine besonders gute Haftung des später aufgebrachten Materials zum Endlosschließen des Keilriemens, insbesondere zum Verkleben bzw. Verschweißen der Stirnseiten des abgelängten Keilriemens.

Als Material für den Grundkörper derartiger Keilriemen kommen in erster Linie technisch hochwertig verklebbarer Gummi bzw. Neoprene oder gut schweißbares Elastomer wie PVC oder Polyurethan in Frage. Die Shorehärte derartiger Polyurethane läßt sich in einfacher Weise über einen großen Bereich variieren, und es ist insbesondere bei der Verwendung von Polyurethan ohne weiteres möglich, das Material, in welchem die verformten Armierungselemente eingebettet sind, mit Shorehärten von etwa 60 bis 80 Shore A auszubilden und mit einem Grundkörper aus Polyurethan mit einer Shorehärte von etwa 30 bis 50 Shore A zu verbinden.

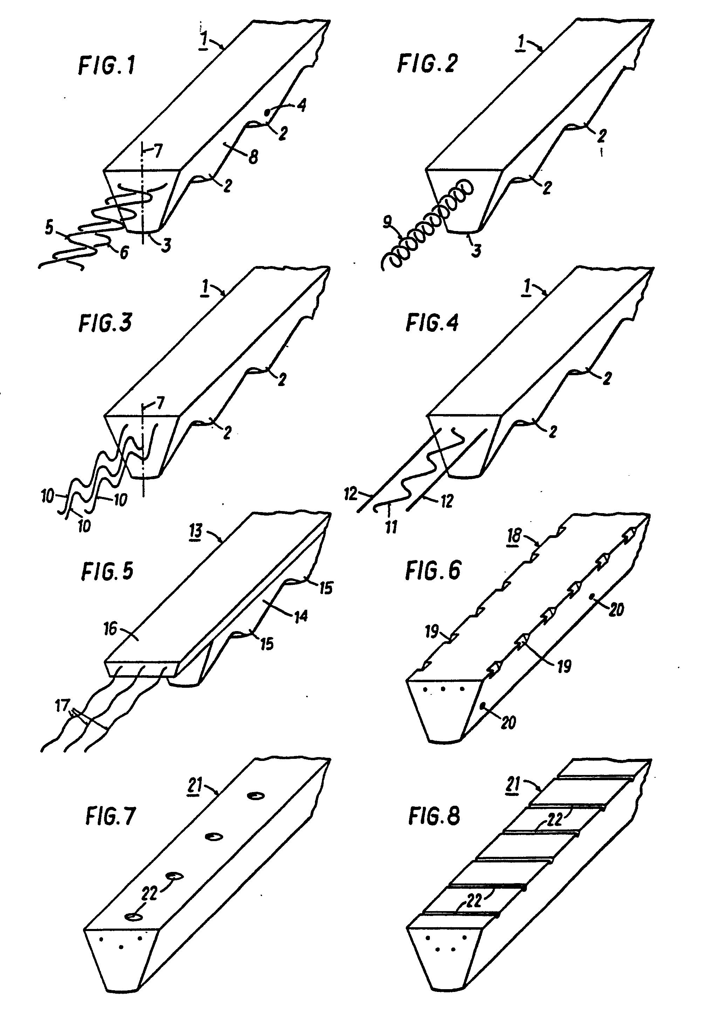

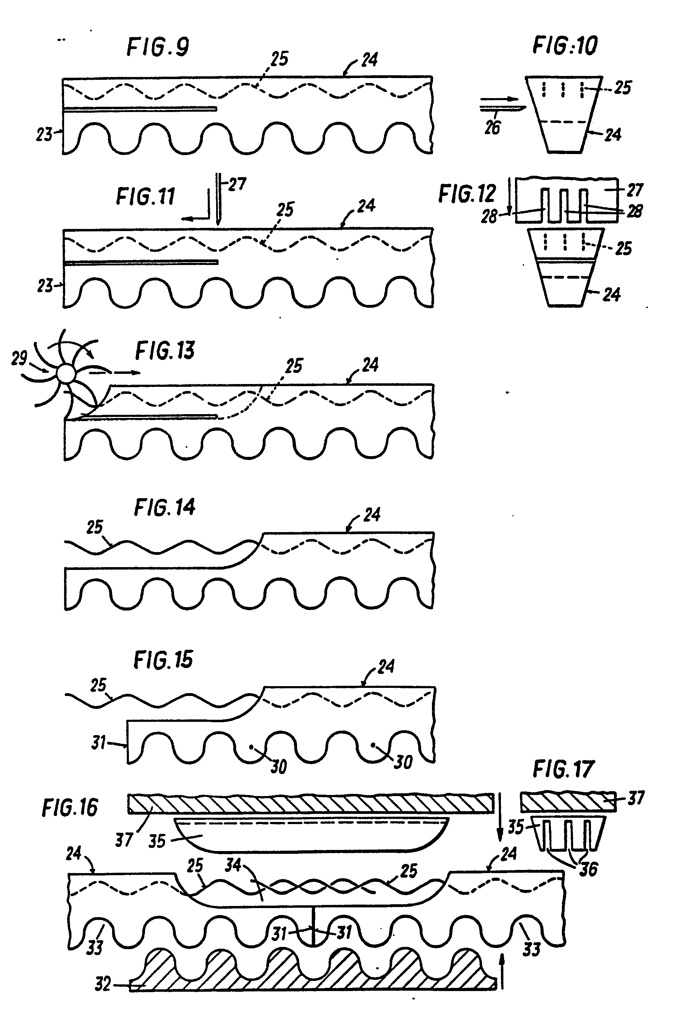

Die Erfindung wird nachfolgend an Hand von in der Zeichnung dargestellten Ausführungsbeispielen näher erläutert. In dieser zeigen Fig. 1 eine erste Ausführungsform des erfindungsgemäßen Keilriemens in perspektivischer Ansicht mit teilweise freigelegten Armierungselementen, Fig. 2, 3, 4 und 5 abgewandelte Ausführungen in analoger Darstellung wie Fig. 1, Fig. 6, 7 und Fig. 8 Ausbildungen des Keilriemens mit regelmäßig wiederkehrenden Markierungen. Fig. 9 bis 17 die Verfahrensschritte für das Endlosschließen derartiger Keilriemen, wobei Fig. 10 eine Draufsicht auf das Messer für die Arbeitsweise nach Fig. 9 und Fig. 12 eine Draufsicht auf das Messer für die Arbeitsweise nach Fig. 11 darstellt und die Fig. 16 und 17 das Endlosschließen des Keilriemens illustrieren.

Bei der Ausführung nach Fig. 1 ist ein Keilriemen 1 dargestellt, welcher eine Zahnung 2 an seiner schmäleren Querschnittseite 3 aufweist.

Die Zahnung 2 kann in regelmäßigen Abständen mit Markierungen 4 versehen sein, um das Ablängen des Keilriemens zu erleichtern. In das Material des Keilriemens 1 sind sinusförmig verformte Armierungselemente 5 und 6 eingebettet, deren Verformungsebene orthogonal zu der durch die Linie 7 angedeuteten Radialebene des Keilriemens 1 angeordnet ist. Bei dieser Ausbildung wird gleichzeitig der auf die Flanken 8 des Keilriemens wirkende Druck durch die Armierungselemente 5 und 6 besser abgestützt.

Bei der Ausbildung nach Fig. 2 ist in das Material des Keilriemens 1 ein schraubenlinienförmig verwundenes Armierungselement 9 eingebettet. Auch dieser Keilriemen weist zur Verbesserung der Biegeeigenschaften eine von einer Zahnung gebildete Profilierung 2 an seiner schmäleren Seite 3 auf.

Bei der Ausbildung nach Fig. 3 sind die Armierungselemente 10 wiederum mäanderförmig verformt, wobei die Verformungsebene in bzw. parallel zu der Radialebene 7 des Keilriemens 1 angeordnet ist.

Bei der Ausbildung nach Fig. 4 sind zusätzlich zu dem wellenförmig verformten Armierungselement 11 gestreckte Armierungselemente 12 vorgesehen. Die Ausbildung kann hiebei so getroffen sein, daß die gewellten Armierungselemente 11 aus Stahl und die gestreckten Armierungselemente aus Fasermaterial beispielsweise Glasfasermaterial, besteht.

Bei der Ausbildung nach Fig. 5 weist der Keilriemen 13 einen Grundkörper 14 auf, welcher eine Zahnung 15 trägt. Mit diesem Grundkörper 14 aus weicherem Material ist das Einbettungsmaterial 16 für die Armierungselemente 17 verklebt oder verschweißt, wobei das Einbettungsmaterial 16 gegenüber dem Grundkörper 14 eine höhere Shore-Härte aufweist.

Anstelle der durch eine Zahnung gebildeten Markierung kann der Keilriemen 18, wie in Fig. 6 darstellt, an seiner Außenseite Ausnehmungen 19 aufweisen, wobei zusätzlich bei jedem ganzzahligen Vielfachen der Zahl dieser Ausnehmungen 19 Markierungen 20 vorgesehen sein können, die das Ablängen erleichtern.

Der Keilriemen 21 gemäß Fig. 7 weist Vertiefungen 22 auf, welche die Flexiblität erhöhen und ein Ablängen des Keilriemens erleichtern. Die Vertiefungen 22 können hiebei, wie in Fig. 7 dargestellt, kreisrunde Querschnittsform aufweisen, oder aber, wie aus Fig. 8 ersichtlich, als quer zur Außenseite des Keilriemens 21 erstreckenden Rillen ausgebildet sein.

Das Endlosschließen derartiger Keilriemen erfolgt, wie in den Fig. 9 bis 17 dargestellt. Die Stirnseite 23 des Keilriemens 24 wird unterhalb der Armierungselemente 25 mit einem Messer 26, wie es beispielsweise in Fig. 10 dargestellt ist, eingestochen. Ein zweiter Schneidvorgang, wie er in Fig. 11 dargestellt ist, wird quer zu diesem ersten Schneidvorgang mit einem Messer 27 vorgenommen, um eine scharfe Kante der zu bildenden Ausnehmung sicherzustellen. Das Messer 27 ist in Fig. 12 im Querschnitt gezeichnet und weist Ausnehmungen 28 für die Armierungselemente 25 auf. Wie in Fig. 13 dargestellt, wird nun der auf diese Weise definierte Endbereich des Keilriemens durch eine rotierende Bürste 29 so ausgefräst, daß nach der Abnahme des Materials, wie in Fig. 14 dargestellt, die Armierungselemente 25 freiliegen. In der Folge wird in Übereinstimmung mit den Markierungen 30 die exakte gewünschte Länge des Keilriemens durch einen Schneidvorgang eingestellt, wobei das nunmehr freiliegende Stirnende mit 31 bezeichnet ist. Analog wird mit der zweiten Stirnseite des abgelängten Keilriemens vorgegangen und es werden die beiden endgültig gebildeten Stirnenden 31, wie in Fig. 16 dargestellt, aneinandergelegt. Hiebei überlappen die freiliegenden Armierungselemente 25 einander in dem Bereich, in welchem die beiden Stirnenden 31 miteinander verbunden werden sollen. Die Anpressung der Stirnenden 31 in dem gewünschten Abstand wird durch ein Paßstück 32, welches in die Zahnung 33 des Keilriemens 24 eingreift, sichergestellt. In den gebildeten Hohlraum 34 wird ein Füllstück 35, welches im Querschnitt in Fig. 17 dargestellt ist, eingesetzt, wobei dieses Füllstück Ausnehmungen 36 für die Armierungselemente 25 aufweist. Dieses Füllstück wird in die Ausnehmung 34 mittels eines Stempels 37 gepreßt und in der Folge mit dem Material des Keilriemens 24 verklebt bzw. verschweißt. An Stelle der Verwendung eines Füllstückes kann in den gebildeten Hohlraum Kunststoff gegossen werden oder eingepreßt werden, wodurch sich eine sichere Verbindung ergibt.

**Patentansprüche**

1. Keilriemen aus verschweißbaren oder verklebbaren Elastomeren mit in seiner Längsrichtung verlaufender Armierung aus Glasfaser oder Stahl mit gegenüber dem Grundkörper (14) höherer Zugfestigkeit, wobei wenigstens ein in Längsrichtung verlaufendes Armierungselement (17) quer zur Längsrichtung des Keilriemens, insbesondere mäanderförmig oder schraubenlinienförmig, verformt ist und in verformtem Zustand in dem Keilriemen eingebettet ist, dadurch gekennzeichnet, daß das Armierungselement in einem Einbettungsmaterial (16) mit gegenüber dem Grundkörper (14) höherer Festigkeit eingebettet ist und daß der Keilriemen über seine Länge in regelmäßigen Abständen voneinander angeordnete Vertiefungen oder Durchbrechungen, insbesondere eine an sich gekannte Zahnung (15) aufweist.

2. Keilriemen nach Anspruch 1, dadurch gekennzeichnet, daß die mäanderförmig verformten Armierungselemente lediglich in einer Ebene verformt sind.

3. Keilriemen nach Anspruch 2, dadurch gekennzeichnet, daß die Verformungsebene der Armierungselemente in der Radialebene des geschlossenen Keilriemens oder orthogonal auf diese Radialebene angeordnet ist.

4. Keilriemen nach einem der Ansprüche 1-3, dadurch gekennzeichnet, daß das Material (16) mit dem Grundkörper verklebt oder verschweißt ist.

5. Keilriemen nach einem der Ansprüche 1 bis 4, dadurch gekennzeichnet, daß die Vertiefungen oder Zahnungen an der schmäleren Profilseite des Keilriemens angeordnet sind.

6. Verfahren zum Endlosschließen des Keilriemens nach einem der Ansprüche 1 bis 5, dadurch gekennzeichnet, daß nach dem Ablängen das Einbettungsmaterial an beiden Stirnbereichen über einen Teilbereich des Querschnittes des Keilriemens unter Freilegen zumindest der verformten Armierungselemente so entfernt wird, daß sich die freiliegenden Armierungselemente überlappen und daß der gebildete Hohlraum (34) nach dem Aneinanderlegen der Stirnenden (31) mit Einbettungsmaterial gefüllt, insbesondere vergossen, verklebt oder verschweißt wird.

**Claims**

1. A V-belt of weldable or bondable elastomeric materials having a typical toothing (15) defined by a plurality of grooves or openings which are arranged at regular intervals along the path of the said V-belt and having a load-carrying body comprised of glass fiber or steel running along its longitudinal axis producing an increased breaking strength in comparison to the main body (14), at least one of the load-carrying elements (17) which runs along the said longitudinal axis is shaped in such a way so as to cut across the said longitudinal axis of the said V-belt particulary in a winding or meandrous path and is embedded in this winding form into the said V-belt, whereby the said load-carrying element is embedded in an embedding material (16) which has a higher breaking strength in comparison to the said main body (14).

2. A V-belt as set forth in claim 1 in which the said meandrous load-carrying elements lie in a single plane.

3. A V-belt as set forth in claim 2 in which the plane which the said load-carrying elements occupy lies in the radial plane of the endless V-belt or is arranged orthogonally to the said radial plane.

4. A V-belt as set forth in one of the claims 1 through 3 in which the said material (16) is adhered or welded to the said main body.

5. A V-belt as set forth in one of the claims 1 through 4 in which the said grooving or said toothing is arranged along the narrower surface of the said V-belt.

6. A process for uniting the two ends of a V-belt as set forth in one of the claims 1 through 5 in which the said V-belt is first cut to length, from a partial area of the cross sectional faces of both ends of the said V-belt, at least enough of the said embedding material is removed on order to permit the overlap of the exposed load-carrying elements, the cavity (34) produced by the alignment of the two faces (31) is filled with embedding material which is in particular poured into the cavity adhered or welded into place.

**Revendications**

1. Courroie de transmission trapézoïdale constituée d'élastomerères que l'on peut souder ou coller, dotée d'une denture typique (15) définie par une série de cavités ou entailles, disposées à intervalles réguliers sur sa longueur, et qui renferme dans la direction du développement longitudinal une armature composée de fibres de verre ou d'acier, offrant une plus grande résistance par rapport au corps principal (14), en quoi au moins un des éléments de l'armature (17), allant dans la direction du développement longitudinal est conçu de manière à passer perpendiculairement à la direction du développement longitudinal de la courroie, de manière hélicoïdale ou en zig-zag, et est encastré dans un matériel d'inclusion (16) qui offre une plus grande résistance par rapport au corps principal (14).

2. Courroie suivant le revendication 1, caractérisée en ce que les éléments de l'armature façonnés en forme de zig-zag, ne sont formés uniquement que dans un plan.

3. Courroie suivant la revendication 2, caractérisée en ce que le plan de formage des éléments de l'armature est disposé sur le plan radial de la courroie de transmission bouclée, ou est placé orthogonalement au plan radial.

4. Courroie suivant l'une quelconque des revendications 1 à 3, caractérisée en ce que le matériel est collé ou soudé au corps principal.

5. Courroie suivant l'une quelconque des revendications 1 à 4, caracterisée en ce que les entailles ou dentures sont situées sur le coté du profilé de la courroie où la surface est la plus étroite.

6. Procédé visant à joindre les deux extrémités de la courroie suivant l'une quelconque des revendications 1 à 5, caractérisée en ce que, après la mise en longueur, suffisamment de matériel d'inclusion est prélevé pour permettre aux éléments de l'armature exposés de se recouvrir; la cavité (34) formée par la jointure des deux extrémités frontales (31) est remplie, surtout scellée collée ou soudée, avec du matériel d'inclusion.

FIG.1

FIG.2

FIG.3

FIG.4

FIG.5

FIG.6

FIG.7

FIG.8

FIG.9

FIG:10

FIG.11

FIG.12

FIG.13

FIG.14

FIG.15

FIG.16

FIG.17